# FASCICULE DE BREVET EUROPEEN

(11) **EP 2 372 505 B1**
(45) Date de publication et mention de la délivrance du brevet: **23.12.2020**
(21) Numéro de dépôt: 11160379.1
(22) Date de dépôt: 30.03.2011
(51) Int. Cl.: G06F 3/041, G06F 3/01

(54) **Dispositif d'interaction haptique**
Vorrichtung zur haptischen Interaktion
Haptic interaction device

(30) Priorité: 02.04.2010 FR 1001391
(43) Date de publication de la demande: 05.10.2011
(73) Titulaire: Thales, 92400 Courbevoie (FR)
(72) Inventeur: Coni, Philippe, 33127 Saint Jean d'Illac (FR); Petitdemange, Arnaud, 33290 Blanquefort (FR)
(74) Mandataire: Marks & Clerk France

(56) Documents cités:
- US-A1- 2004 227 721
- US-B2- 6 822 635
- US-B2- 7 602 384
- MICHAEL LEVIN AND ALFRED WOO: "Tactile-Feedback Solutions for an Enhanced User Experience", INFORMATION DISPLAY, PALISADES INSTITUTE FOR RESEARCH SERVICES. NEW YORK, US, no. 10, 1 janvier 2009 (2009-01-01), pages 18-21, XP007915375, ISSN: 0362-0972

## Description

Le domaine de l'invention concerne les dispositifs d'interaction comprenant une surface tactile, et plus particulièrement les dispositifs de visualisation ayant une diagonale d'au moins dix pouces.

Les dispositifs de visualisation tactile comportent un écran pour l'affichage de données et une couche active disposée directement devant l'écran entre l'observateur et l'écran. Cette couche active comporte une surface sensible activée par le doigt ou la main d'un utilisateur ou tout autre moyen d'actionnement et permet de commander un équipement ou un système au travers d'une interface graphique présentée par l'écran. Il existe un grand nombre d'utilisations possibles. On citera en particulier les applications aéronautiques où un pilote peut ainsi contrôler et commander l'ensemble des fonctions affichées par le système avionique de l'aéronef.

De telles interfaces doivent présenter à l'utilisateur un retour d'information, par exemple le changement d'état d'un bouton, de sorte que l'opérateur puisse visualiser le passage de non-activé à activé, et confirmer ainsi son interaction. Le mode d'interaction par surface tactile avec un utilisateur n'est pas très collaboratif et des erreurs peuvent intervenir, liées au doute sur l'activation ou non de la commande, par exemple dans le cas de commandes en aveugle où le pilote doit avant tout assurer sa tache principale en regardant vers l'extérieur. Pour ce faire, les dispositifs de visualisation peuvent solliciter le sens auditif de l'utilisateur par génération d'un son pour réaliser le retour d'information. Cependant, dans un environnement bruité, notamment une cabine de pilotage d'aéronef il n'est pas toujours aisé de percevoir ce retour d'information.

On connaît également des systèmes haptiques à retour de force qui permettent d'augmenter la réalité de l'interaction, en donnant un retour physiologique sur l'état de l'objet activé. Suivant l'état de l'art généralement constaté, ce retour est déclenché à la seule condition de présence du moyen d'activation, généralement le doigt. Dans la réalité, lorsque l'on active un élément de commande d'un système, comme par exemple un bouton poussoir ou un potentiomètre, celui-ci réagit à l'appui, car il dispose d'une fonction de réaction, qui peut être sa raideur, sa course, sa viscosité, son seuil de déclenchement. Par exemple, un bouton poussoir dispose d'une pré-course, sa loi d'enfoncement dépend de sa raideur et de la force appliquée par le moyen d'activation. Mais au-delà d'une certaine valeur, la force de réaction du poussoir décroît brutalement, et c'est à cet instant précis que l'activation se produit (et seulement si l'effort a atteint ce seuil). Cette loi est réversible au relâché du bouton. On appellera cette propriété la fonction de réaction haptique. Cette fonction fait intervenir le toucher physique, encore appelé kinesthésique, c'est à dire en relation avec le système nerveux et musculaire de l'opérateur. De la même façon, un état de surface, une texture, peuvent être caractérisés par une fonction de réaction haptique, dans ce cas, on fait intervenir les récepteurs sensoriels situés à l'extrémité des terminaisons nerveuses de la peau, appelés récepteurs paciniens.

Il existe de très nombreux systèmes haptiques utilisant une surface tactile mise en mouvement vibratoire au moyen d'actuateurs. Un actuateur est un système électromécanique qui permet de transformer de l'énergie électrique en énergie mécanique sous la forme le plus souvent d'un mouvement d'une pièce mécanique. Il est en général piloté par un contrôleur relié à un dispositif informatique.
Ces actuateurs sont de différents types :
- Masse excentrique rotative (ERM) : Il s'agit d'une masse excentrée qui crée des efforts d'inertie radiaux. L'ensemble du système vibre, et de ce fait, ce dispositif ne s'applique qu'aux instruments nomades. En effet, pour un équipement fixé sur un support rigide, l'effet sera nul, ou pire, si le support est souple, il pourra rentrer en résonance.
- Masse sismique résonante (LRM) : Une masse suspendue par un ressort est mise en résonance par un dispositif électromagnétique ou électrostatique. Ce principe souffre du même inconvénient que le premier.
- Electromagnétique : L'actuateur est constitué d'un cadre déformable par le déplacement d'un noyau a l'intérieur d'une bobine. Le déplacement latéral produit est retransmis à l'écran grâce à une armature. Un tel dispositif est par exemple décrit dans le brevet WO2006124873A1
- Piezo bimorph : Deux types d'actuateurs sont utilisés : lames vibrantes (« Piezo beam ») et disques cloquant (« Piezo disk »). Ces actuateurs utilisent les efforts cisaillant induit par la céramique piezo recouvrant une ou deux faces de l'actuateur. Un exemple d'un tel dispositif est donné dans le brevet US2008122315A1.
- Electrostatique : Par effet capacitif, deux couches parallèles recouvrant l'écran sont attirées ou repoussées entre elles pour stimuler l'objet en interaction.
- A mémoire de forme : Certains matériaux retrouvent une forme particulière lorsqu'ils sont soumis à une certaine température.

On comprendra mieux ces généralités en se referant a « Tactile-Feedback Solution for an Enhanced User Expérience, M.Levin and A. Woo, Information Display October 2009 Vol.25 No10 »

Tous ces systèmes ne sont pas adaptés pour la reproduction des effets kinesthésiques, et particulièrement sur des grands écrans, produisant des efforts inertiels important en sollicitation dynamique. Par exemple, dans la demande de brevet US2007080951A1, des actuateurs piezo bimorph disposés directement à l'arrière d'une surface tactile entre un cadre support et la surface tactile, mais ils ne délivrent que des forces de l'ordre du Newton, insuffisant pour s'opposer à l'effort d'un opérateur. De plus, les grandes surfaces tactiles, c'est-à-dire les surfaces ayant une diagonale au moins égale à 15 pouces, possèdent des fréquences de résonances basses rendant difficile la génération d'effets vibro-tactiles aux fréquences sensibles aux récepteurs paciniens qui sont comprises dans une plage de fréquence de l'ordre de 150 à 250 Hz. De plus, les actuateurs cités et actuellement utilisés produisent des efforts normaux à l'écran très faibles, bien inférieurs à ce que peut produire un opérateur. On pourrait penser multiplier le nombre d'actuateurs, mais cela augmenterait le prix, la consommation, l'encombrement et le poids du système.

On connaît des céramiques piezo qui s'allongent en fonction de la tension appliquée. Toutefois, cet allongement est de l'ordre de 0.1%. Ainsi, pour obtenir 0.5 mm de course, il faudrait un actuateur de 50 cm de long, ce qui n'est pas réalisable sur un écran plat.

On connaît également la demande de brevet internationale WO2009/088707 décrivant un dispositif de visualisation comportant une surface tactile, un cadre sur lequel repose la surface tactile et des actuateurs assemblés avec des rails réalisant des mouvements parallèles au plan de la surface tactile. Les rails s'étendant longitudinalement le long du cadre sont couplés mécaniquement avec le cadre et le support fixe du dispositif de visualisation. Les rails permettent de diminuer le nombre d'actuateurs nécessaires dans un tel dispositif. Les actuateurs utilisés pour la mise en œuvre du dispositif haptique ne sont pas adaptés à une utilisation pour écran de grande taille.

Certains dispositifs déplacent latéralement la surface tactile, de façon à bénéficier d'une plus grande rigidité, mais dans ce cas, la reproduction d'effets kinesthésiques n'est plus possible, puisque l'effort appliqué par l'opérateur est normal à l'écran, et que le dispositif ne pourra s'y opposer.

Un autre problème est la rigidité de l'écran, celui-ci ayant tendance à fléchir au centre. De ce fait, sous une excitation latérale, il va avoir tendance à résonner à une fréquence plus basse et donc à amortir les effets transmis.

Le document US 7 602 384 B2 divulgue une tablette portable tactile. Le document US 6 822 635 B2 divulgue une tablette tactile. Du document US 2004/227721 A1, on connaît un ensemble selon le préambule de la revendication 1.

L'objectif de l'invention est de proposer une solution haptique fiable pour des dispositifs de visualisation de grande taille, c'est-à-dire d'au moins 15 pouces de diagonale, permettant de simuler de façon réaliste tout type de bouton.

Plus précisément, l'invention concerne un ensemble comprenant un dispositif d'interaction et une pièce de réception du dispositif d'interaction. Le dispositif d'interaction comprend une surface tactile apte à générer des données d'entrée lorsque la dite surface tactile est en contact avec un actionneur, un cadre fixé sur la périphérie de la dite surface tactile, un actuateur apte à générer une force de réaction en fonction des dites données d'entrée et un support auquel est couplé le dit actuateur.

Le cadre et la surface tactile sont agencés de sorte à former un ensemble rigide ayant une fréquence de résonance d'au moins une centaine de Hertz et en ce que l'actuateur est couplé directement avec le cadre pour déplacer l'ensemble rigide par rapport au support, la fréquence de résonance dudit actuateur étant sensiblement égale à la fréquence de résonance de l'ensemble rigide. Le support est couplé immobile avec la pièce de réception.

Selon une variante, la surface tactile est plane et l'actuateur génère une force de réaction selon un axe perpendiculaire au plan de la surface tactile.

De préférence, la fréquence de résonance de l'ensemble rigide est environ 200Hz.

Selon une variante, l'ensemble comprend un dispositif de mesure d'effort pour sécuriser un contact avec la surface tactile..

Selon une variante, le dispositif comporte quatre actuateurs aptes à mettre en mouvement l'ensemble rigide.

Selon une variante, un actuateur est un actuateur piézoélectrique.

Selon une variante, la surface tactile est de forme rectangulaire de diagonale d'au moins une dizaine de pouces.

Selon une variante, le dispositif comprend également un écran plat.

L'écran plat est avantageusement à cristaux liquides.

La structure constituée d'une part par l'ensemble rigide, la surface tactile et le cadre, et d'autre part par des actuateurs amplifiés permet de simuler une grande variété d'effets à retour de force pour des surface tactile de grande diagonale au regard des solutions de l'état de la technique.

En outre, la fréquence de résonance de l'ensemble rigide est avantageusement adaptée pour améliorer la sensation de l'effet produit par l'utilisateur actionnant le dispositif d'interaction du fait que les récepteurs paciniens soient particulièrement réceptifs à cette fréquence de résonance.

De plus, le montage de l'ensemble rigide est conçu pour résonner à une fréquence voisine de 200 Hz, fréquence à laquelle les actuateurs ont leur résonance électrique. Ainsi, la mise en mouvement de la dalle sera aidée par le phénomène de résonance, limitant ainsi la puissance électrique nécessaire aux actuateurs.

L'invention sera mieux comprise et d'autres avantages apparaîtront à la lecture de la description qui va suivre donnée à titre non limitatif et grâce aux figures annexées parmi lesquelles :
La figure 1 représente un schéma de montage du dispositif d'interaction selon l'invention.
La figure 2 représente un actuateur piézoélectrique à amplification.
La figure 3 est un graphique illustrant la zone de sensibilité des récepteurs paciniens.

L'invention apporte une solution technique pour le développement de dispositif d'interaction tactile et haptique de grande surface, c'est-à-dire pour les écrans dont la diagonale est supérieure à 10 pouces. Ce type de dispositif de visualisation peut être destiné pour des planches de bord d'aéronef par exemple mais concerne bien évidemment tout type d'application comme le matériel multimédia domestique ou les bornes à usage public présentées dans des environnements plus exposés que le foyer des particuliers.

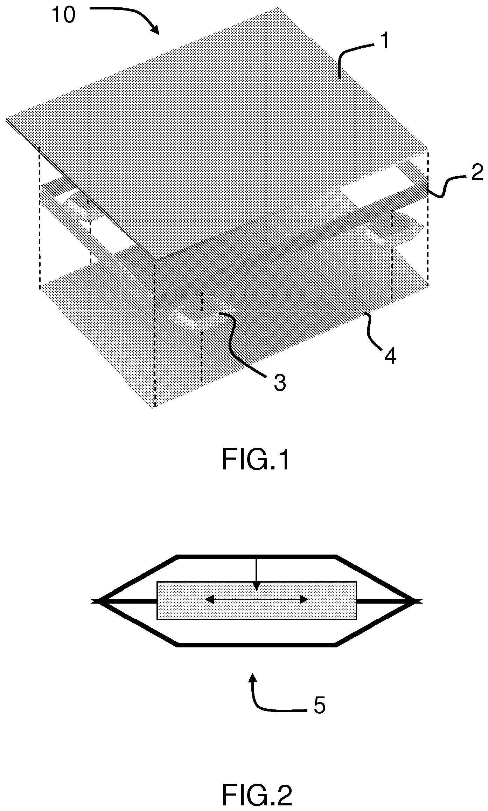

La figure 1 représente un montage de dispositif de visualisation pour un écran dont la diagonale mesure environ 15 pouces. L'écran n'est pas représenté sur la figure. En effet, le type d'écrans utilisé dans le dispositif de visualisation n'est pas une caractéristique limitative de l'invention. De préférence, une technologie à écran plat est utilisée afin de proposer un dispositif de visualisation de faible profondeur. On peut citer par exemple les écrans LCD, les écrans plasma, les dispositifs à éclairage à LED (« light-emitting diode ») ou éclairage OLED (« Organic Light-Emitting Diode ») ou tout autre dispositif pour l'affichage d'images. L'écran peut être fixé directement sur une face de la surface tactile ou être monté à l'intérieur du dispositif de visualisation entre la surface tactile 1 et le support 4 du dispositif de visualisation.

Le dispositif de visualisation 10 comporte une surface tactile 1 montée sur la face avant, la face avant étant définie comme la face présentée à l'observateur et celle présentant les images. De même que pour l'écran, la technologie de surface tactile utilisée ne limite pas la portée de l'invention. La surface tactile 1 peut être une couche tactile capacitive, résistive ou toute autre technologie permettant de détecter la présence d'un actionneur pointant une zone de la surface tactile. La surface tactile 1 est disposée entre l'actionneur et l'écran de façon à détecter la zone pointée par l'actionneur. On entend par actionneur tout objet utilisé pour pointer une zone de l'écran, c'est-à-dire le doigt de l'opérateur ou un stylet par exemple.

Le dispositif de visualisation 10 comporte un cadre 2 couplé avec la surface tactile 1 de sorte à former un ensemble rigide ayant une fréquence de résonance comprise sur une plage de valeur située à quelques centaines de Hz. Le cadre est constitué d'un matériau présentant une faible inertie et une grande rigidité. Le cadre 2 et la surface tactile 1 peuvent être couplés par des moyens d'assemblage par collage, par serrage ou par fixation à vis. Le cadre 2 est fixé à la surface 1 de préférence sur la zone périphérique de la surface tactile, sur les bords de la surface tactile ou le dessous de la surface ou également par le dessus de la surface. Dans ce dernier cas, le cadre est directement visible par l'utilisateur.

Le dispositif de visualisation comporte quatre actuateurs 3 répartis sur les quatre coins du dispositif de visualisation. Les actuateurs 3 peuvent aussi être situés en d'autres positions du dispositif de visualisation 10. Les actuateurs utilisés sont des actuateurs dits amplifiés car ces éléments sont capables d'amplifier mécaniquement leurs courses. De tels actuateurs sont capables de générer une force de plusieurs dizaines de Newtons et jusqu'à plusieurs centaines. On peut citer par exemple un actuateur amplifié tel que décrit dans la demande de brevet français FR2740276A1. La figure 2 représente un actuateur à amplification 5 tel que décrit dans cette demande. Ces actuateurs piézoélectriques génèrent un mouvement vertical par déformation de la structure. Ils permettent d'obtenir une course proportionnelle à la tension appliquée, depuis un régime quasi statique jusqu'aux fréquences ultrasonores. Ils permettent ainsi de produire un effet important, supérieur à ce qu'un opérateur peut produire avec son doigt sur la surface tactile.

Les actuateurs 3 sont couplés d'une part avec le support 4 du dispositif de visualisation et d'autre part avec le cadre 2. Le support 4 est la pièce de structure du dispositif de visualisation 10 pouvant être couplée avec une pièce de réception fixée dans l'habitacle du cockpit de l'aéronef. Le support 4 est monté solidaire et immobile dans l'habitacle par rapport au récepteur. Ce support 4 peut par exemple être une pièce de structure pouvant être insérée dans un rack de réception.

Les actuateurs 3, le cadre 2 et la surface tactile 1 sont agencés de sorte que le cadre et la surface tactile forment un ensemble rigide dont la fréquence de résonance est située sur une plage de fréquences correspondant à la plage de fréquences de sensibilité des récepteurs paciniens d'un individu, c'est-à-dire environ entre 50 et 200 Hz et de sorte que les actuateurs mettent en mouvement cet ensemble rigide en fonction de données d'entrée générées par l'action de contact d'un actionneur avec la surface tactile. Les actuateurs fonctionnent à une fréquence de résonance semblable à la fréquence de résonance de l'ensemble constitué par la surface tactile 1 et le cadre 2, ainsi les actuateurs requièrent moins d'énergie d'excitation pour mettre en mouvement l'ensemble rigide. L'invention permet de mettre en œuvre un dispositif de visualisation haptique de grande taille dans un environnement embarqué soumis à de fortes contraintes de consommation. De préférence, la fréquence de résonance choisie pour l'ensemble rigide est sensiblement égale à 200 Hz.

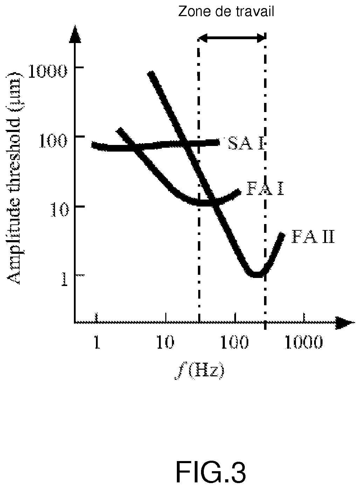

La figure 3 (extraite de la publication "Tactile Display of Surface Texture by use of Amplitude Modulation of Ultrasonic Vibration", 1051-0117/06© 2006 IEEE) montre la sensibilité des récepteurs sensibles au toucher.

L'épiderme des extrémités sensibles tel que les doigts renferment des récepteurs dit « paciniens » sensible aux sollicitations vibratoires. Il en existe deux familles : les récepteurs rapides FA (pour Fast adaptative) et les récepteurs lents SA (Pour Slowly adaptative), chacune de ces catégories étant divisées en deux types I et II.

L'axe horizontal du graphique comporte les fréquences auxquelles une surface tactile est mise en vibration. L'axe vertical comporte l'amplitude de mouvement de la surface tactile.

Les courbes FA II, FA I et SA I nous intéressent plus particulièrement dans la reproduction d'effets haptiques et l'on comprendra mieux ainsi l'intérêt de fonctionner à des fréquences de l'ordre de 50 à 200 Hz.

Les actuateurs 3 montés dans le dispositif de visualisation 10 génèrent un mouvement selon une direction normale au plan constitué par la surface tactile 1. Il est ainsi possible de reproduire fidèlement les effets kinesthésiques d'objets dynamiques tels que des interrupteurs, des boutons ou tout autre organe de commande.

De plus, le dispositif de visualisation 10 peut être muni avantageusement d'un système de mesure d'effort. Il est bien connu que certains types de surfaces tactiles peuvent fournir de faux appuis, par exemple par une sollicitation environnementale non souhaitée. Dans ce cas, un dispositif de mesure d'effort permet de ne pas déclencher d'effets de façon intempestive. Ce dispositif peut être constitué par des jauges de contraintes, connues de l'état de la technique et telles que décrit par exemple dans la demande de brevet américain US 5.801.682A. Il est également possible d'utiliser la mesure d'effort obtenue par une fonction tactile telle que décrit dans la demande internationale WO 2008065205. Tout système équivalent de mesure d'effort peut être utilisé. Avantageusement, un actuateur de type piézoélectrique est préférablement utilisé car il a la propriété réversible de générer une tension proportionnelle à la force appliquée.

L'invention s'applique avantageusement aux dispositifs de visualisation installés dans des environnements où l'utilisateur est sollicité par une multitude d'informations et de tâches à exécuter et pour lequel il est important d'obtenir un retour d'information par le sens du toucher en plus du visuel. Les domaines sont variés et peuvent être les habitacles de véhicule comme un aéronef ou une voiture par exemple.

## Revendications

1. Ensemble comprenant
un dispositif d'interaction et
une pièce de réception du dispositif d'interaction,
ledit dispositif d'interaction comprenant
une surface tactile (1) apte à générer des données d'entrée lorsque la dite surface tactile est en contact avec un actionneur,
un actuateur (3) apte à générer une force de réaction en fonction des dites données d'entrée et
un support (4) auquel est couplé le dit actuateur (3),
le dit ensemble étant **caractérisé en ce que** le dispositif d'interaction comprend un cadre (2) fixé sur la périphérie de la dite surface tactile (1), le cadre (2) et la surface tactile (1) étant agencés de sorte à former un ensemble rigide (1-2) ayant une fréquence de résonance d'au moins une centaine de Hertz et
**en ce que** l'actuateur (3) est couplé directement avec le cadre (2) pour déplacer l'ensemble rigide (1-2) par rapport au support (4), la fréquence de résonance dudit actuateur (3) étant sensiblement égale à la fréquence de résonance de l'ensemble rigide (1-2), le support (4) étant couplé immobile avec la pièce de réception.

2. Ensemble selon la revendication 1, dans lequel la surface tactile (1) est plane et en ce que l'actuateur (3) génère une force de réaction selon un axe perpendiculaire au plan de la surface tactile.

3. Ensemble selon la revendication 1, dans lequel la fréquence de résonance de l'ensemble rigide est environ 200Hz.

4. Ensemble selon la revendication 1, comprenant un dispositif de mesure de l'effort pour sécuriser un contact avec la surface tactile (1).

5. Ensemble selon l'une quelconque des revendications précédentes, comprenant quatre actuateurs (3) aptes à mettre en mouvement l'ensemble rigide.

6. Ensemble selon l'une quelconque des revendications précédentes, dans lequel un actuateur (3) est un actuateur piézoélectrique.

7. Ensemble selon l'une quelconque des revendications précédentes, dans lequel la surface tactile (1) est de forme rectangulaire de diagonale d'au moins une dizaine de pouces.

8. Ensemble selon l'une quelconque des revendications précédentes, comprenant également un écran plat.

9. Ensemble selon la revendication précédente, dans lequel l'écran plat est à cristaux liquides.

## Patentansprüche

1. Anordnung, welche eine Interaktionsvorrichtung und ein Empfangsteil der Interaktionsvorrichtung umfasst, wobei die Interaktionsvorrichtung eine taktile Oberfläche (1) umfasst, welche in der Lage ist, Eingangsdaten zu erzeugen, wenn die taktile Oberfläche in Kontakt mit einem Betätigungselement ist, ein Stellglied (3), welches in der Lage ist, eine Reaktionskraft angesichts der Eingangsdaten zu erzeugen und eine Stütze (4), mit welcher das Betätigungselement (3) gekoppelt ist, wobei die Anordnung durch gekennzeichnet ist, dass die Interaktionsvorrichtung einen Rahmen (2) umfasst, welcher an dem Umfang der taktilen Oberfläche (1) befestigt ist, wobei der Rahmen (2) und die taktile Oberfläche (1) so angeordnet sind, dass sie eine steife Anordnung (1-2) bilden, welche eine Resonanzfrequenz von mindestens rund 100 Hz besitzt und das Stellglied (3) direkt mit dem Rahmen (2) gekoppelt ist, um die steife Anordnung (1-2) in Bezug auf die Stütze (4) zu verschieben, wobei die Resonanzfrequenz des Stellgliedes (3) im Wesentlichen gleich der Resonanzfrequenz der steifen Anordnung (1-2) ist, wobei die Stütze (4) unbeweglich mit dem Empfangsteil gekoppelt ist.

2. Anordnung nach Anspruch 1, wobei die taktile Oberfläche (1) eben ist und das Stellglied (3) eine Reaktionskraft entlang einer zu der Ebene der taktilen Oberfläche rechtwinkligen Achse erzeugt.

3. Anordnung nach Anspruch 1, wobei die Resonanzfrequenz der steifen Anordnung ungefähr 200 Hz beträgt.

4. Anordnung nach Anspruch 1, welche eine Vorrichtung zur Messung der Kraft zum Sichern eines Kontakts mit der taktilen Oberfläche (1) umfasst.

5. Anordnung nach einem der vorhergehenden Ansprüche, welche vier Stellglieder (3) umfasst, welche in der Lage sind, die steife Anordnung in Bewegung zu versetzen.

6. Anordnung nach einem der vorhergehenden Ansprüche, wobei ein Stellglied (3) ein piezoelektrisches Stellglied ist.

7. Anordnung nach einem der vorhergehenden Ansprüche, wobei die taktile Oberfläche (1) eine rechteckige Form mit einer Diagonalen von mindestens rund zehn Zoll aufweist.

8. Anordnung nach einem der vorhergehenden Ansprüche, welche ebenfalls einen Flachbildschirm umfasst.

9. Anordnung nach dem vorhergehenden Anspruch, wobei der Flachbildschirm ein Flüssigkristall-Bildschirm ist.

## Claims

1. Assembly comprising an interaction device; and a reception part of the interaction device; said interaction device comprising a touch-sensitive surface (1) capable of generating input data when said touch-sensitive surface is in contact with an actuator; an actuator (3) capable of generating a reaction force as a function of said input data; and a support (4) to which said actuator (3) is coupled; said assembly being **characterized in that** the interaction device comprises a frame (2) fixed to the periphery of said touch-sensitive surface (1), the frame (2) and the touch-sensitive surface (1) being arranged so as to form a rigid assembly (1-2) that has a resonant frequency of at least a hundred Hertz and **in that** the actuator (3) is directly coupled to the frame (2) to displace the rigid assembly (1-2) relative to the support (4), the resonant frequency of said actuator (3) being substantially equal to the resonant frequency of the rigid assembly (1-2), the support (4) stationarily coupled to the reception part.

2. Assembly according to Claim 1, wherein the touch-sensitive surface (1) is planar and the actuator (3) generates a reaction force along an axis perpendicular to the plane of the touch-sensitive surface.

3. Assembly according to Claim 1, wherein the resonant frequency of the rigid assembly is approximately 200 Hz.

4. Assembly according to Claim 1, comprising a force measuring device for securing a contact with the touch-sensitive surface (1).

5. Assembly according to any one of the preceding claims, comprising four actuators (3) capable of setting the rigid assembly into motion.

6. Assembly according to any one of the preceding claims, wherein an actuator (3) is a piezoelectric actuator.

7. Assembly according to any one of the preceding claims, wherein the touch-sensitive surface (1) is of rectangular shape with a diagonal of at least ten or so inches.

8. Assembly according to any one of the preceding claims, also comprising a flat screen.

9. Assembly according to the preceding claim, wherein the flat screen is of liquid crystal type.
